# EUROPÄISCHE PATENTSCHRIFT

(11) **EP 0 621 187 B1**
(45) Veröffentlichungstag und Bekanntmachung des Hinweises auf die Patenterteilung: **29.01.1997**
(21) Anmeldenummer: 94106053.5
(22) Anmeldetag: 19.04.1994
(51) Int. Cl.: B65B 57/00

(54) **Vertikal taktweise arbeitende Flachbeutelmaschine**
Vertical machine for making flat bags operating intermittently
Machine de fabrication de sachets plats disposée verticalement et à opération intermittente

(30) Priorität: 22.04.1993 DE 4313205
(43) Veröffentlichungstag der Anmeldung: 26.10.1994
(73) Patentinhaber: Klöckner Hänsel GmbH, 30163 Hannover (DE)
(72) Erfinder: Doede, Klaus, D-33415 Verl (DE)
(74) Vertreter: Rehberg, Elmar, Dipl.-Ing.

(56) Entgegenhaltungen:
- EP-A- 0 010 018
- GB-A- 930 182
- GB-A- 1 114 447
- US-A- 2 513 581

## Beschreibung

Die Erfindung bezieht sich auf eine vertikal taktweise arbeitende Flachbeutelmaschine zum Abpacken von fließ- oder rieselfähigen Materialien oder von Gegenständen in zu siegelnde Flachbeutel, die aus zwei Folien mit gemeinsamer vertikaler Folienebene gebildet werden, mit einem Maschinenrahmen, an dem von oben nach unten eine Dosierstation mit Einfüllorganen, eine Umlenkstation für die zwei Folien, eine Siegelstation, eine Abzugseinrichtung und eine Längs- und Querschneidestation vorgesehen sind, wobei die Siegelstation zwei symmetrisch aufgebaute Einheiten aus je einem Schwenkholm, einem Siegelholmträger, einem mit einem Siegelantrieb versehenen Siegelholm, einer Heizplatte, einer Spannplatte und den darauf befestigten Siegelwerkzeugen aufweist und die Einheiten je um eine Schwenkachse aus einer parallel zur Folienebene verlaufenden, insbesondere um die Länge eines Siegelhubes auseinandergefahrenen Position um etwa 90° in eine Einricht- und Reinigungsstellung verschwenkbar sind. Als Einfüllorgane dienen Rohre, wenn flüssige oder pastöse Massen, wie Senf, Ketchup, Zahnpasta u. dgl. abgepackt werden. Rieselfähige Produkte, wie Salz, Pfeffer, Pulver oder Granulat zur Herstellung von Getränken o. dgl. werden durch Einfülltrichter abgegeben. Aber auch feste Produkte wie Tabletten, Kapseln, Pflaster o. dgl. können über entsprechend angepaßte Einfüllorgane oberhalb der Siegelstation abgegeben werden.

Vertikal taktweise arbeitende Flachbeutelmaschinen der vorstehend genannten Art sind bekannt. Wesentliches Merkmal ist, daß sich die beiden Folien in einer gemeinsamen vertikalen Folienebene bewegen, was sich jedenfalls auf die Siegelstation sowie benachbarte Stationen bezieht. Die Folienebene verläuft dabei vertikal und im rechten Winkel zu dem Maschinenrahmen der Flachbeutelmaschine, d. h. die vor der Flachbeutelmaschine stehende Bedienungsperson blickt in Richtung der Folienebene und auf eine sich im wesentlichen vertikal erstreckende Wandung des Maschinenrahmens. Die einzelnen Aggregate und Stationen sind in Balkonbauweise an dem Maschinenrahmen verwirklicht. Die Siegelstation an solchen Flachbeutelmaschinen hat bekanntlich die Aufgabe, die zwei sich mit ihren Innenseiten gegenüberstehenden Folien durch Druck und Temperatur unter Erzeugung der Flachbeutel miteinander zu verschweißen. Die Innenseiten der Folienbahnen sind mit einer Siegelmasse, insbesondere Polyethylen, versehen. In der Regel wird dabei mit Mehrfachnutzen gearbeitet, d. h. es werden mehrere Flachbeutel nebeneinander gleichzeitig gefüllt, gesiegelt und behandelt. Dabei wird die Breite der Folien möglichst abfallos ausgenutzt, d. h. die Längssiegelwerkzeuge, die entlang der Folienränder arbeiten, sind so knapp eingestellt, daß sich auf ihnen unvermeidlich Rückstände der Siegelmasse aufbauen, die unter Einwirkung des Druckes zwischen den beiden zusammengepreßten Folien herausgequetscht wird. Diese Siegelmasse sammelt sich an den äußeren Längssiegelbacken an. Auch an den äußeren Flachbeuteln können sich Rückstände der Siegelmasse absetzen, insbesondere dann, wenn sich solche Rückstände an den äußeren Längssiegelbacken aufgebaut haben und die Rückstände teilweise von dem äußeren Flachbeutel abgerissen und mitgenommen werden. Dabei besteht nicht nur die Gefahr, daß an dem äußeren Flachbeutel unschöne Ränder entstehen. Bei vermehrtem Aufbau von Siegelmasse kann diese auch auf die aus Papier bestehende Außenlage der Folie gelangen, was dazu führt, daß bei der taktweisen Bewegung der Flachbeutel die Gefahr des Einrisses der Beutel gegeben ist. Dies führt dann zu einer Betriebsunterbrechung unter Entfernung des Ausschusses. Es werden erhebliche Reinigungsarbeiten an der Flachbeutelmaschine und deren Aggregaten erforderlich.

Um diesen beschriebenen Nachteilen und Gefahren entgegenzuwirken, ist bei bekannten Flachbeutelmaschinen (z. B. der Maschine LA-3 gemäß dem Prospekt "Flachbeutelmaschinen" der Anmelderin) die Möglichkeit geschaffen, die beiden symmetrisch aufgebauten Einheiten der Siegelstation aus einer verrasteten Arbeitsstellung zu lösen und die Einheiten jeweils um 90° manuell aufzuschwenken. Der Verschwenkvorgang verläuft dabei um vertikale Achsen, so daß sich die Spannplatte mit den darauf sitzenden Siegelwerkzeugen relativ zu den zwei Folien und den Einfüllorganen bewegt. Da die Einfüllorgane mehr oder weniger weit in die Siegelstation einragen und sich die Längssiegelwerkzeuge parallel zu den Einfüllorganen befinden, besteht beim manuellen Aufschwenken der Einheiten in eine Einricht- und Reinigungsstellung die Gefahr, daß dabei durch die Siegelwerkzeuge die Einfüllorgane berührt, in ihrer sorgfältig eingestellten Relativlage verändert oder sogar bleibend verformt werden. Diese Gefahr ist deshalb so groß, weil sich die Längssiegelwerkzeuge und die Einfüllorgane während der Aufschwenkbewegung der Einheiten um die vertikalen Achsen in einem großen Bereich überlappen und damit während des Aufschwenkvorgangs berühren können. Dabei sollte zusätzlich darauf geachtet werden, daß der Aufschwenkvorgang nur aus der auseinandergefahrenen Position der Siegelwerkzeuge heraus eingeleitet wird. Nach Beendigung der Betriebsunterbrechung sind die Einheiten wieder manuell zurückzuschwenken und zu verriegeln. In dieser Einricht- und Reinigungsstellung können die Siegelwerkzeuge auch von anhaftender Siegelmasse gereinigt werden, was üblicherweise mit einer Bürste durchgeführt wird Bei der Umstellung der Flachbeutelmaschine auf ein anderes Produkt oder ein anderes Format müssen die Siegelwerkzeuge gewechselt werden, was ebenfalls nur in der Einricht- und Reinigungsstellung möglich ist. Die Siegelwerkzeuge befinden sich auch in der Einricht- und Reinigungsstellung vertikal übereinander, so daß es beim Lösen und Befestigen der Siegelwerkzeuge erforderlich ist, diese in der jeweiligen Höhenlage abzustützen. Der Wechsel ist damit umständlich und zeitraubend.

Sämtliche zu dosierende Produkte sind während ihrer Verweildauer im Bereich der Siegelstation auch der dort herrschenden Temperatur ausgesetzt. Die Siegelwerkzeuge können bis zu 180°C warm sein. Insbesondere pharmazeutische oder kosmetische Produkte können durch eine übermäßige Wärmeeinwirkung, die bereits bei einer kurzzeitigen Produktionsunterbrechung eintreten kann, nachteilig beeinflußt werden, wenn die Einheiten der Siegelstation auch während einer solchen kurzzeitigen Betriebsunterbrechung nicht in die Einricht- und Reinigungsstellung manuell verschwenkt werden. Wegen der beschriebenen anderweitigen Gefahren, insbesondere der Beschädigung der Einfüllorgane, unterbleibt jedoch das mühevolle manuelle Aufschwenken in die Einricht- und Reinigungsstellung zuweilen. Eine solche immer wieder vorkommende kurzzeitige Produktionsunterbrechung ist beispielsweise während eines Rollenwechsels der Folie gegeben. Bei Produktionsunterbrechungen, bei denen das Aufschwenken der Einheiten in die Einricht- und Reinigungsstellung unterbleibt, besteht weiterhin die Gefahr, daß die Folieninnenseiten mit den produktführenden Einfüllorganen verkleben. Bei Inbetriebnahme der Flachbeutelmaschine führt dies dann zu einem Abriß der Folien.

Bei den bekannten Flachbeutelmaschinen ist man natürlich bestrebt, möglichst breite Folien zu verarbeiten, also eine ganze Anzahl von Flachbeutel nebeneinander gleichzeitig zu bilden. Hierzu ist es jedoch erforderlich, daß sich die Siegelwerkzeuge gegenüber einer die beiden vertikalen Schwenkachsen verbindenden Vertikalebene nach hinten in Richtung auf den Maschinenrahmen erstrecken. Beim Verschwenken der Einheiten nähert sich infolge der geometrischen Verhältnisse der hinten liegende Teil der Siegelwerkzeuge der Folie und den Einfüllorganen an, d. h. er kommt während dieser Schwenkbewegung der Folie und den Einfüllorganen näher, so daß in besonderer Weise die Gefahr des Verbiegens, Verdrückens und Veränderns der Einstellung der relativen Lage der Einfüllorgane gegeben ist. Diese Gefahr ist umso größer, je größer die Nutzbreite ist. Dieser beschriebene Gefahrenbereich erstreckt sich über die gesamte Höhe der Siegelwerkzeuge.

Es sind auch vertikal arbeitende Flachbeutelmaschinen bekannt, bei denen die Anordnung so getroffen ist, daß die Folienebene sich parallel zu der Wandung des Maschinenrahmens befindet, so daß die vor der Flachbeutelmaschine stehende Bedienungsperson auf die Folienebene blickt. Die Siegelwerkzeuge sind dann mit ihrer einen Einheit vor der Folienebene und mit der anderen Einheit hinter der Folienebene angeordnet, Dabei ist die vor der Folienebene vorgesehene Einheit entfernbar vorgesehen, um Reingungs- oder Einrichtarbeiten an ihr durchzuführen. Die hinter der Folienbahn vorhandene Einheit kann aber nur dadurch zugänglich gemacht werden, daß die beiden Folien entfernt werden, was beim Wiederanfahren der Maschine ein besonders umständliches Wiedereinfädeln der Folien erforderlich macht.

Durch die US-PS 4 854 109 ist es an sich bekannt, an Maschinen, auf denen Materialien zwischen zwei Folien eingesiegelt werden, zeitweise von der Folie zu entfernende Gehäuseteile dadurch wegzuschwenken, daß diese um horizontal hervorstehende Schwenkachsen geschwenkt werden, die im wesentlichen im unteren Bereich der zu verschwenkenden Gehäuseteile angeordnet sind Die Siegelwerkzeuge sind davon jedoch nicht betroffen. Sie befinden sich auf einem Schlitten, mit dessen Hilfe sie in einer Richtung senkrecht zu der Folienebene translatorisch verfahrbar sind.

Die Erfindung geht von der zuvor geschilderten Problematik aus. Ihr liegt die Aufgabe zugrunde, bei einer Flachbeutelmaschine der eingangs beschriebenen Art die Gefahr der Beschädigung der Einfüllorgane beim Verschwenken der Einheiten in eine Einricht- und Reinigungsstellung praktisch auszuschließen, den Wechsel der Siegelwerkzeuge zu erleichtern und auch bei kurzzeitigen Produktionsunterbrechungen einen Anreiz zum Verschwenken der Einheiten in die Einricht- und Reinigungsstellung zu setzen.

Erfindungsgemäß wird dies bei der Flachbeutelmaschine der eingangs beschriebenen Art dadurch erreicht, daß die Schwenkachsen für die Einheiten horizontal angeordnet sind und daß wesentliche Bereiche der Siegelwerkzeuge und Spannplatten oberhalb einer die Schwenkachsen verbindenden Horizontalebene vorgesehen sind. Dies betrifft insbesondere die Längssiegelwerkzeuge, kann sich aber auch nur auf wesentliche Bereiche der Längssiegelwerkzeuge oder andererseits auch auf die Quersiegelwerkzeuge beziehen.

Durch die relativ andere Anordnung der Schwenkachsen, um die die Einheiten in die Einricht- und Reinigungsstellung verschwenkbar sind, wird eine andere Bewegungsgeometrie insbesondere der Längssiegelwerkzeuge und der Spannplatte relativ zur Folienebene erreicht. Während im Stand der Technik insbesondere die oberen Enden der Längssiegelwerkzeuge zu Beginn der Verschwenkung eine tangentiale Bewegung zur Folienebene ausführten, werden insbesondere die oberen Enden der Längssiegelwerkzeuge aufgrund der anderen Anordnung der Schwenkachsen zu Beginn einer Verschwenkbewegung senkrecht von der Folienebene hinweggeschwenkt. Die Längssiegelwerkzeuge haben daher keine Möglichkeit mehr, die Einfüllorgane zu berühren. Die Längssiegelwerkzeuge werden nunmehr jeweils in Ebenen verschwenkt, in denen die Einfüllorgane gerade nicht angeordnet sind. Die Erfindung macht sich damit den Vorteil zunutze, der sich aus der Differenz der beiden Folien zueinander an der Stelle der Anordnung der Einfüllorgane zu der Dicke der Folien ergibt. Die Folienbreite spielt bei der neuen Relativanordnung der Einheiten keine Rolle mehr; es können damit ohne weiteres auch breitere Folien als im stand der Technik verarbeitet werden. Bei der Aufschwenkbewegung der Einheiten führen allenfalls im unteren Bereich der Spannplatte oder der Spannplatten vorgesehene Siegelwerkzeuge eine tangentiale Anfangsbewegung zu der Folienebene aus. Dies geschieht jedoch in einem Bereich, der sich in der Regel weit unterhalb der freien Enden der Einfüllorgane befindet, also dort, wo die Siegelwerkzeuge ohnehin die Einfüllorgane nicht berühren können.

Weiterhin ist vorteilhaft, daß ein Werkzeugwechsel und anfallende Reinigungsarbeiten erheblich erleichtert sind. Dies ist darauf zurückzuführen, daß sich die Siegelwerkzeuge in der Einricht- und Reinigungsstellung aufgeklappt in horizontal ausgerichteter Lage befinden, also in einer Lage, in der sie nicht manuell unterstützt gehalten werden müssen. Die Spannplatte, die auch mehrteilig ausgebildet sein kann, kann in einfacher Weise mit den darauf sitzenden Siegelwerkzeugen ausgewechselt werden. In der Einricht- und Reinigungsstellung tritt keine Erhöhung des Platzbedarfes an der Flachbeutelmaschine ein, da die Einheiten in einer Ebene parallel zum Maschinenrahmen verschwenkt werden. Insoweit werden auch Bedienungspersonen weniger gefährdet. In der Einricht- und Reinigungsstellung geben die heißen Werkzeuge ihre Wärme nach oben ab und gefährden damit nicht mehr den Bereich der Folien und der Einfüllorgane mit den Produkten. Auch das Ankleben der Folie an produktführenden Teilen entfällt. Die Produkte werden bei Prodüktionsunterbrechungen temperaturmäßig praktisch nicht mehr beaufschlagt und damit auch nicht beeinträchtigt.

Mit besonderem Vorteil ist ein maschineller Antrieb für die Verschwenkung der beiden Einheiten in die Einricht- und Reinigungsstellung sowie zurück vorgesehen. Damit entfällt das mühevolle manuelle Aufschwenken, und es ist die Möglichkeit geschaffen, die Einricht- und Reinigungsstellung auch bei jeder nur kurzzeitigen Produktionsunterbrechung zu erreichen. Insoweit ist für die Bedienungsperson auch ein Anreiz gegeben, die manuelle Reinigung der insbesondere äußeren Längssiegelwerkzeuge öfter als bisher durchzuführen, wodurch die Betriebssicherheit erhöht wird.

Der maschinelle Antrieb kann mit einer Steuereinrichtung versehen sein, die bei jeder Produktionsunterbrechung die Einricht- und Reinigungsstellung ansteuert. Insbesondere ist die Steuereinrichtung so ausgebildet, daß beim Einleiten einer Produktionsunterbrechung die Steuereinrichtung die Einheiten in die auseinandergefahrene Stellung bringt und dort stillsetzt. Aus dieser auseinandergefahrenen Stellung wird dann die Einricht- und Reinigungsstellung angesteuert. Am Ende der Produktionsunterbrechung, also beim Wiedereinschalten der Maschine, erfolgt die Verschwenkung der Einheiten zunächst in die auseinandergefahrene Stellung. Nach einer entsprechenden maschinellen Verriegelung wird dann die Produktion aufgenommen.

Auch die Quersiegelwerkzeuge können an der Spannplatte oberhalb der die Schwenkachsen verbindenden Horizontalebenen angeordnet sein. Damit befinden sich sämtliche Siegelwerkzeuge oberhalb der genannten Horizontalebene, wobei wiederum die Längssiegelwerkzeuge oberhalb der Quersiegelwerkzeuge vorgesehen sind. Die Quersiegelwerkzeuge erstrecken sich zwar quer zu den Einfüllorganen, jedoch relativ weit unterhalb der freien Enden der Einfüllorgane, so daß beim Verschwenken nicht die Gefahr der Beschädigung besteht. Die Längssiegelwerkzeuge einerseits und die Quersiegelwerkzeuge andererseits können jeweils auf getrennten Spannplatten angeordnet sein. Es ist aber auch möglich, daß die Quersiegelwerkzeuge geringfügig unterhalb der die Schwenkachsen verbindenden Horizontalebene angeordnet sind. In diesem Fall empfiehlt es sich, die Einricht- und Entriegelungsstellung nur aus der auseinandergefahrenen Stellung heraus anzusteuern. Zu Beginn der Verschwenkbewegung bewegen sich dann zwar die Quersiegelwerkzeuge noch etwas auf die Folien zu, allerdings ohne diese zu erreichen oder zu beeinträchtigen.

Es sind Fühler, insbesondere Endschalter, vorgesehen, die auf das Erreichen der um den Siegelhub auseinandergefahrenen Stellung der Einheiten ansprechen. Über die Signale der Fühler leitet die Steuereinrichtung die Verschwenkung in die Einricht- und Reinigungsstellung ein. Damit ist eine eindeutige Arbeitsabfolge festgelegt, die mit großer Sicherheit arbeitet.

Der maschinelle Antrieb für die Verschwenkung der Einheiten kann einen Getriebemotor, zwei immer in Eingriff miteinander stehenden Zahnräder und je eine getriebliche Verbindung zu dem Schwenkholm jeder Einheit aufweisen. Durch die Zahnräder wird die gegenläufige Bewegung der beiden Einheiten zueinander zwangsweise gekoppelt. Die nachgeschaltete getriebliche Verbindung macht es entbehrlich, die Zahnräder mit ihrer Achse auf der Schwenkachse des Schwenkholms anzuordnen. Auf diese Art und Weise können verschiedene Übersetzungsstufen nacheinander geschaffen werden.

Der Schwenkholm kann hohl ausgebildet sein und der Siegelantrieb für den Siegelholm kann durch den Schwenkholm jeder Einheit hindurchgeführt sein. Dies erbringt den Vorteil, daß der maschinelle Antrieb für die Verschwenkung der Einheiten und der Siegelantrieb für den Siegelholm jeder Einheit einander nicht nachteilig beeinflussen. Insbesondere ist es nicht erforderlich, zum Erreichen der Einricht- und Reinigungsstellung den Siegelantrieb zu entkuppeln. Freilich ist eine Betätigung des Siegelantriebes während des Verschwenkens der Einheiten und in der Einricht- und Reinigungsstellung nicht vorgesehen.

Im Schwenkholm kann eine Schubstange hin- und hergehend angetrieben sein, mit der ein Gabelklotz verbunden ist; in dem Siegelholmträger ist dabei ein Kniehebeltrieb für die Umlenkung des Siegelantriebes auf den Siegelholm und damit letztlich auf die Siegelwerkzeuge vorgesehen, wobei der Gabelklotz an dem Kniehebeltrieb angreift. Die Verwendung eines Kniehebeltriebes erbringt einerseits den Vorteil der unmittelbaren Kraftumlenkung um 90°, so daß letztendlich der Siegelhub über die Siegelwerkzeuge in der Folienebene übertragen werden kann. Andererseits gestattet es der Kniehebeltrieb, auch große Kräfte feinfühlig einstellbar zu machen, wobei auch die für die Siegelung typischen Zeitintervalle eingehalten werden können.

Jede Einheit kann mit einer Spanneinrichtung zum schnellen Wechsel der Spannplatte mit den darauf eingerichteten Siegelwerkzeugen versehen sein. Es kann beispielsweise ein Exzenterspanner Anwendung finden, um die Spannplatte mit den darauf eingerichteten Längssiegelwerkzeugen mit einem Handgriff entspannen zu können. Die Spannplatte kann mit Nuten versehen sein, so daß die Spannplatte von der Heizplatte über eine Verschiebung in den Nuten abgenommen werden kann. Eine vorher vorbereitete zweite Spannplatte mit anders eingerichteten Längssiegelwerkzeugen kann in der gleichen Weise einfach aufgeschoben werden, wobei die Heizplatte in der Einricht- und Reinigungsstellung eine horizontale Lage einnimmt, so daß während der Montage die Spannplatte von der Heizplatte bereits abgestützt ist. Über einen Exzenterspanner kann die neue Spannplatte sehr schnell und einfach festgezogen werden, so daß ein solcher Werkzeugwechsel wesentlich kürzer als bisher durchführbar ist. Es empfiehlt sich, die Längssiegelwerkzeuge einerseits und die Quersiegelwerkzeuge andererseits an voneinander getrennten Spannplatten anzuordnen, einmal um kleinere Einheiten zu schaffen und zum anderen um einen Austausch der Quersiegelwerkzeuge einzusparen, wenn nur die Längssiegelwerkzeuge ausgetauscht werden müssen.

Die Erfindung wird anhand eines bevorzugten Ausführungsbeispiels weiter erläutert und beschrieben. Es zeigen:
- Figur 1: eine Fronansicht der Flachbeutelmaschine,
- Figur 2: eine Seitenansicht der Flachbeutelmaschine gemäß Figur 1,
- Figur 3: einen Horizontalschnitt durch die vertikale Folienebene mit den Einfüllorganen,
- Figur 4: einen Vertikalschnitt durch einige Teile der Einheit,
- Figur 5: eine schematisierte Seitenansicht des Schwenkantriebs,
- Figur 6: eine schematisierte Draufsicht auf den Schwenkantrieb gemäß Figur 5,
- Figur 7: einen Horizontalschnitt durch die Schwenkholme entsprechend einer die Achsen der Schwenkholme verbindenden Horizontalebene,
- Figur 8: einen Vertikalschnitt durch einen Schwenkholm mit dem aufgesetzten Siegelholmträger,
- Figur 9: eine Draufsicht auf den Teil des Siegelantriebs, der im Siegelholmträger untergebracht ist und
- Figur 10: eine zugehörige geschnittene Vorderansicht im Bereich des Schwenkholms mit dem aufgesetzten Siegelholmträger.

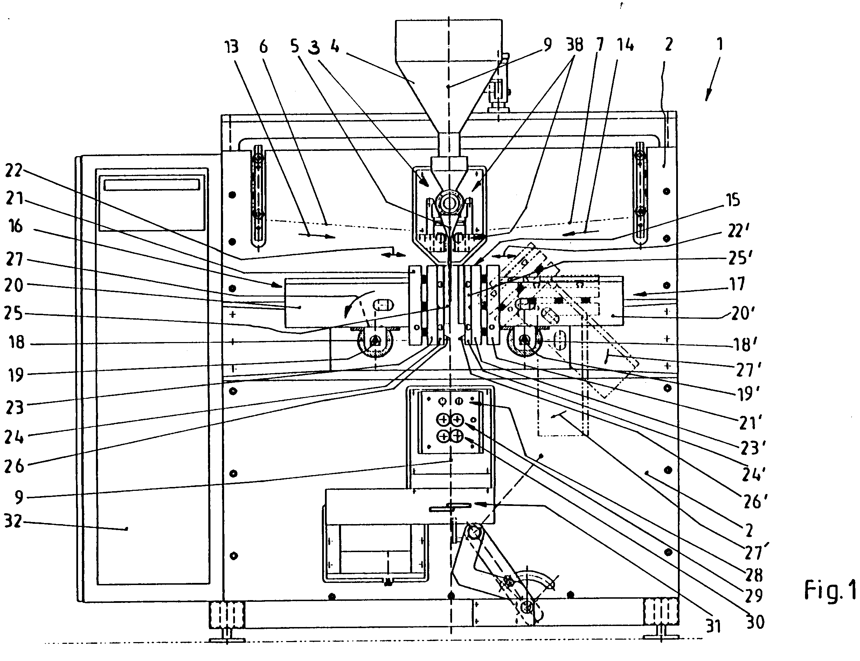

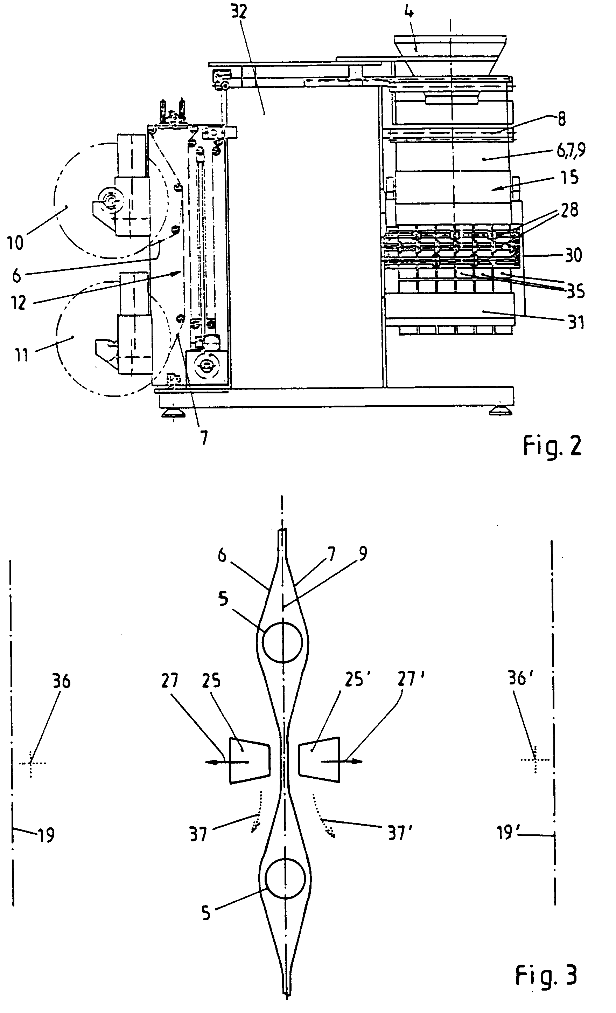

In Figur 1 ist die Flachbeutelmaschine 1 so dargestellt, wie sie sich einer vor der Flachbeutelmaschine 1 stehenden Bedienungsperson darbietet. Die Flachbeutelmaschine 1 weist einen Maschinenrahmen 2 auf, der sich im wesentlichen als vertikale Wandung darbietet und insoweit mit der Zeichenebene der Figur 1 zusammenfällt. Vorgelagert in Balkonbauweise vor der vertikalen Wandung des Maschinenrahmens 2 erstreckt sich von oben nach unten eine Dosierstation 3 mit einem aufgesetzten Vorratsbehälter für fließ- oder rieselfähige Produkte, die letztendlich über Einfüllorgane 5 zwischen zwei Folien 6 und 7 abgegeben werden, die an einer Umlenkstation 8 unter Einschluß der nach unten ragenden Einfüllorgane 5 mit ihren Rückseiten in eine Relativlage zueinander gebracht werden. Dies erfolgt in einer vertikalen Folienebene 9, also einer Vertikalebene senkrecht zur Zeichenebene bzw. senkrecht zu der Wandung des Maschinenrahmens 2. Dabei wird die Folie 6 von einer Rolle 10 und die Folie 7 von einer Rolle 11 auf der Rückseite der Flachbeutelmaschine 1 (Figur 2) abgezogen, durch einen Folienspeicher 12 geleitet und oberhalb des Maschinenrahmens 2 getrennt voneinander auf die Vorderseite geführt, wobei die beiden Folien 6 und 7 letztlich über Umlenkrollen gemäß Pfeilen 13 und 14 in die Umlenkstation 8 einlaufen und von dort dann in die Folienebene 9 gelangen.

Unterhalb der Umlenkstation 8 befindet sich eine Siegelstation 15, die im wesentlichen symmetrisch zu der Folienebene 9 aufgebaut ist und im wesentlichen aus zwei Einheiten 16 und 17 besteht. Die Einheit 16 weist einen Schwenkholm 18 auf, der aus einem rohrartigen, oben offenen Körper besteht, der sich um eine Schwenkachse 19 herum erstreckt. Der Schwenkholm 18 und die Schwenkachse 19 sind senkrecht zu der Zeichenebene und damit zu der vertikalen Wandung des Maschinenrahmens 2 angeordnet. Die Schwenkachse 19 erstreckt sich an der Flachbeutelmaschine 1 in horizontaler Richtung parallel zur Folienebene 9. Auf dem Schwenkholm 18 sitzt ein Siegelholmträger 20, der als kastenartiges Gehäuse ausgebildet ist. Auf der der Folienebene 9 zugekehrten Seite ist ein Siegelholm 21 vorgesehen, der gegenüber dem stillstehenden Siegelholmträger 20 entsprechend einem Doppelpfeil 22, der den Siegelhub der Einheit 16 wiedergibt, hin- und herbeweglich ist. Mit dem Siegelholm 21 ist eine Heizplatte 23 verbunden, an der wiederum eine Spannplatte 24 sitzt, an welcher Längssiegelwerkzeuge 25 und Quersiegelwerkzeuge 26 befestigt sind.

Die linke Einheit 16 und die rechte Einheit 17 sind symmetrisch zur Folieebene 9 aufgebaut. Die entsprechenden Einzelteile der rechten Einheit 17 sind mit einem gestrichenen Bezugszeichen versehen. Die Einheit 16 ist um die Schwenkachse 19 um etwa 90° gemäß Pfeil 27 verschwenkbar, während die Einheit 17 um die Schwenkachse 19' gemäß den Pfeilen 27' in umgekehrtem Drehsinn verschwenkbar ist. Die Einheit 16 ist in der Siegelstellung, also mit an die Folienebene 9 angedrückten Siegelwerkzeugen 25, 26 dargestellt. Die Einheit 17 ist in durchgezogener Linienführung in der auseinandergefahrenen Stellung gemäß Pfeil 22' dargestellt. In gestrichelt und doppelt gepunkteter Linienführung sind zwei Zwischenstellungen gemäß den Pfeilen 27' angedeutet, um den Aufschwenkvorgang der Einheit 17 um die Schwenkachse 19' aus der auseinandergefahrenen Stellung in eine Einricht- und Reinigungsstellung aufzuzeigen. Es versteht sich, daß die beiden Einheiten 16 und 17 abweichend von der zeichnerischen Darstellung immer nur symmetrisch zueinander betätigt werden. Die zeichnerische Darstellung ist zum Aufzeigen der verschiedenen Möglichkeiten gewählt worden. In der Einricht- und Reinigungsstellung nimmt der Siegelholmträger 20' eine im wesentlichen vertikale Lage ein, während der Siegelholm 21', die Heizplatte 23', die Spannplatte 24' und die Längssiegelwerkzeuge 25' sowie die Quersiegelwerkzeuge 26' sich in einer im wesentlichen horizontalen Ausrichtung befinden.

Unterhalb der Siegelstation 15 ist eine Signierstation 28, eine Abzugseinrichtung 29, eine Längsschneidestation 30 und eine Querschneidestation 31 vorgesehen.

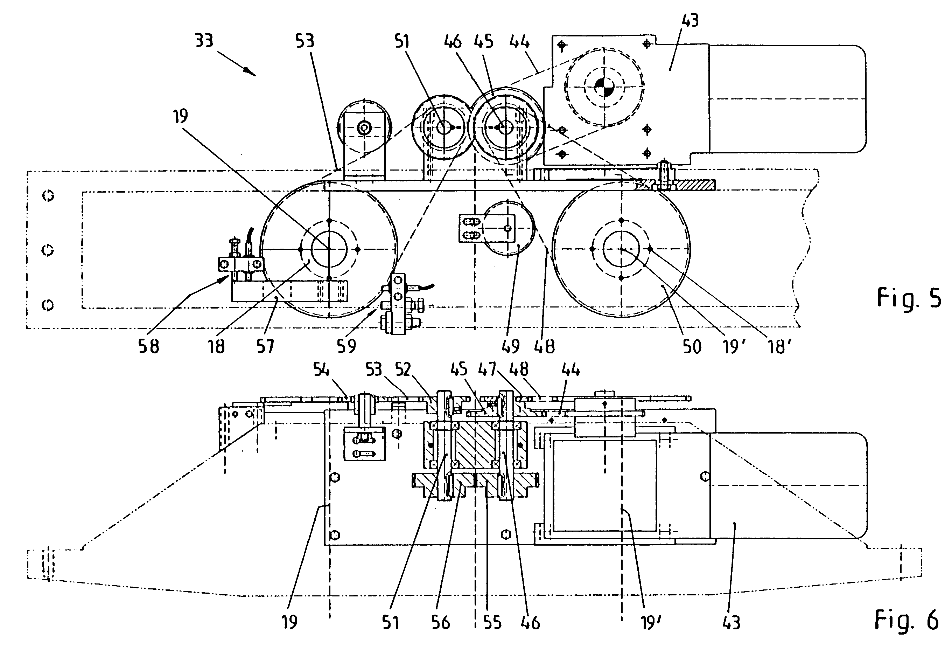

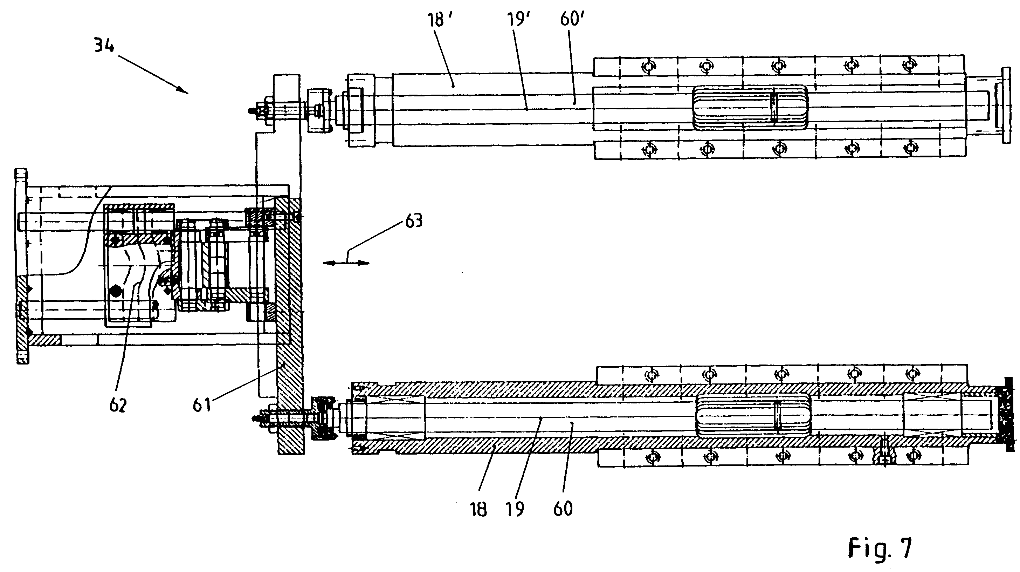

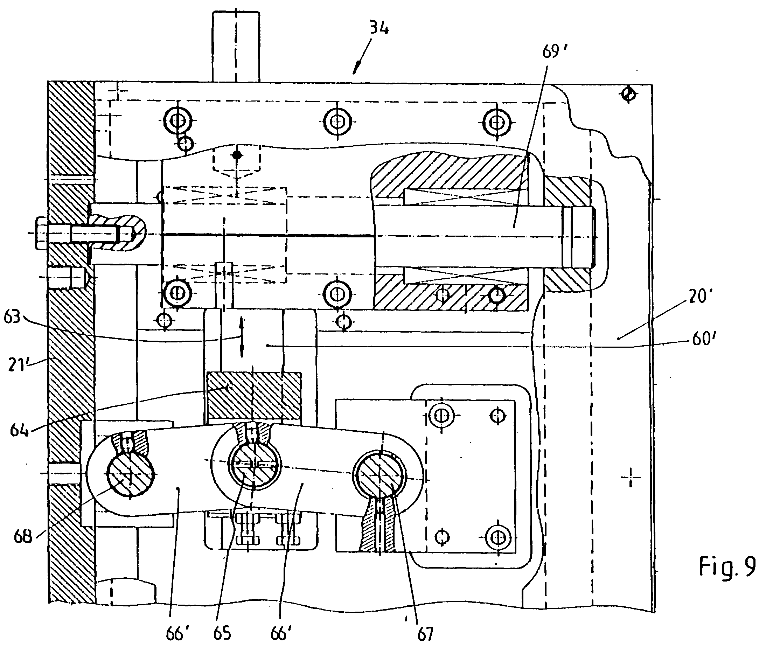

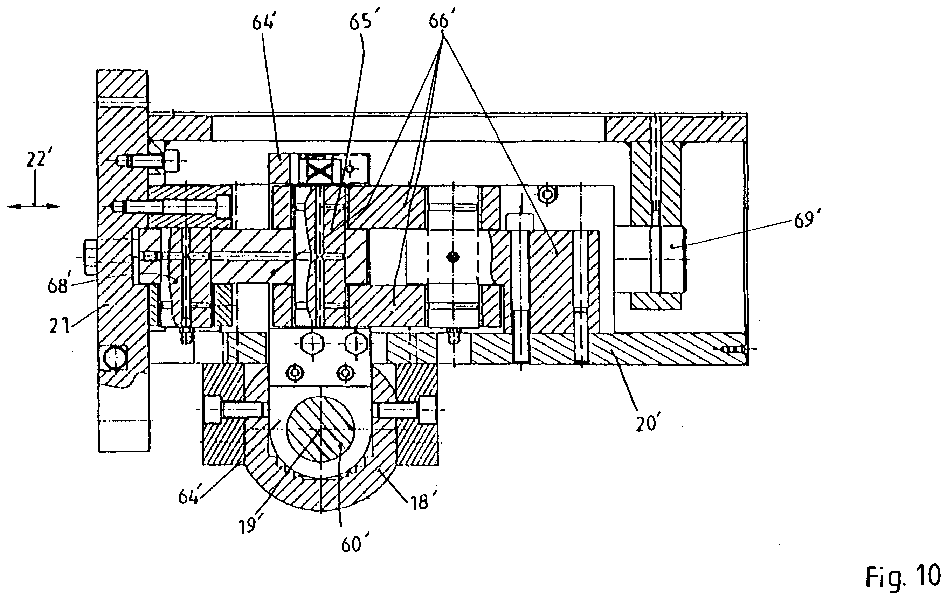

Die Flachbeutelmaschine 1 weist eine Steuereinrichtung 32 auf, die zur Steuerung der verschiedenen Bewegungsabläufe dient. Es ist ein maschineller Antrieb 33 (Figuren 5 und 6) für die gleichzeitige Verschwenkung der Einheit 16 um die Schwenkachse 19 einerseits und der Einheit 17 um die Schwenkachse 19' andererseits vorgesehen. Die Steuereinrichtung 32 steuert darüberhinaus einen Siegelantrieb 34, mit welchem ein Teil der Einheiten 16 und 17 entsprechend den Doppelpfeilen 22 bzw. 22' hin- und hergehend angetrieben werden. Einzelheiten dieses Siegelantriebes 34 sind aus den Figuren 7 bis 10 ersichtlich.

Figur 2 zeigt in Draufsicht die beiden Folien 6 und 7 bzw. die Folienebene 9, die hier mit der Zeichenebene übereinstimmt. Es ist auch erkennbar, daß die Folien 6 und 7 in sechs Flachbeutel 35 nebeneinander unterteilt werden, die dann in der Querschneidestation 31 abgetrennt werden, so daß sie einzeln weiter gehandhabt, beispielsweise in einen Transportkarton überführt werden können. In Figur 2 erkennt man auch die Siegelnähte, wie sie von den Längssiegelwerkzeugen 25 und den Quersiegelwerkzeugen 26 erbracht werden.

Figur 3 zeigt in einem Horizontalschnitt eine Teildarstellung zur Verdeutlichung der Erfindung. Die erfindungsgemäße Anordnung ist in durchgezogener Linienführung mit strichpunktiert angegebenen Schwenkachsen 19 und 19' verdeutlicht. In gepunkteter Darstellung ist zum Vergleich die Anordnung gemäß dem Stand der Technik dargestellt. Es ist erkennbar, daß sich die als Rohre angedeuteten Einfüllorgane 5 symmetrisch zu der Folienebene 9 befinden und zwischen die beiden Folien 6 und 7 bis hinunter in die Siegelstation 15 einragen, wie dies auch in Figur 1 angedeutet ist. Zur Verdeutlichung sind nur die Längssiegelwerkzeuge 25, 25' dargestellt. Während im Stand der Technik die Längssiegelwerkzeuge 25 und 25' (sowie auch weitere Teile der vergleichbaren Einheiten 16 und 17) um vertikale Schwenkachsen 36 bzw. 36' schwenkbar waren, so daß sich die Längssiegelwerkzeuge 25 und 25' entsprechend den gepunkteten Pfeilen 37 bzw. 37' bewegten. Dabei bestand die Gefahr, daß die Längssiegelwerkzeuge 25 und 25' die Einfüllorgane 5 berühren, zerquetschen und in ihrer Lage veränderten, so daß sie nicht mehr in der Mittelachse eines Flachbeutels 35 blieben. Dies war ein sehr störender Nebeneffekt im Stand der Technik, der umfangreiche Einrichtarbeiten erforderlich machte. Bei der neuen Anordnung schwenken die Längssiegelwerkzeuge 25 und 25' um die Schwenkachsen 19 und 19' und entfernen sich somit gemäß den Pfeilen 27 und 27' bereits zu Beginn eines Schwenkvorgangs unmittelbar von der Folienebene 9 weg, so daß nicht mehr die Gefahr besteht, daß die Längssiegelwerkzeuge 25 und 25' an den Einfüllorganen 5 anstoßen können. Wird weiterhin noch berücksichtigt, daß die Aufschwenkbewegung um die Schwenkachsen 19 und 19' insbesondere aus der auseinandergefahrenen Stellung gemäß Figur 1, rechte Seite, heraus eingeleitet wird, dann wird gänzlich verständlich, daß der Aufschwenkvorgang gemäß der neuen Anordnung ohne die im Stand der Technik bekannten Nachteile erfolgt. Anhand der Figur 3 ist auch vorstellbar - obwohl dies nicht dargestellt ist -, daß sich die Quersiegelwerkzeuge 26, die gewöhnlich unterhalb der freien Enden der Einfüllorgane 5 angeordnet sind, bereits zu Beginn einer Aufschwenkbewegung ebenfalls von der Folienebene 9 wegbewegen.

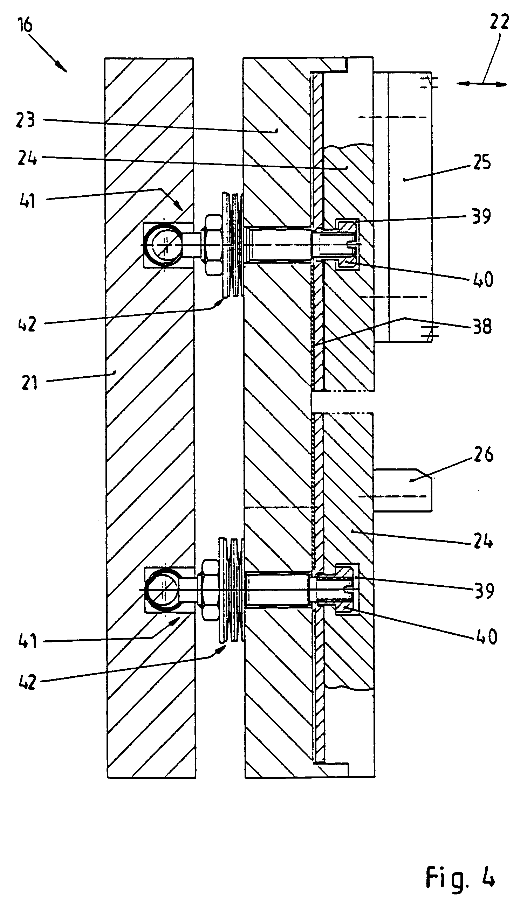

Figur 4 verdeutlicht den Aufbau der Teile der Einheit 16, die nicht nur gemäß Pfeil 27 um die Schwenkachse 19 schwenkbar sind, sondern auch dem Siegelantrieb 34 gemäß Pfeil 22 unterliegen. Auf dem Siegelholm 21 ist die Heizplatte 23 angeordnet, die mit einer Heizfolie 38 versehen ist, die elektrisch beheizt wird. Die Temperatursteuerung erfolgt ebenfalls über die Steuereinrichtung 32. Die Spannplatte 24, die auch mehrteilig ausgebildet sein kann, besitzt T-förmige durchgehende Nuten 39, in die Spannköpfe 40 von Spanneinrichtungen 41 eingreifen. Die Spanneinrichtungen 41 können als Exzenterspanner ausgebildet sein und in dem Siegelholm 21 gelagert sein. Die obere Spanneinrichtung 41 ist in entspannter Lage dargestellt, in welcher die obere Spannplatte 24 mit den darauf sitzenden Längssiegelwerkzeugen 25 in Richtung der Nut 39 frei verschoben werden kann. Die untere Spanneinrichtung 41 zeigt den gespannten Zustand, in der also die untere Spannplatte 24 mit den Quersiegelwerkzeugen 26 gegen die Heizplatte 23 festgespannt ist. Es versteht sich, daß der somit angedeutete Werkzeugwechsel mit einem Austausch der Spannplatte 24 und den darauf sitzenden Längssiegelwerkzeugen 25 oder Quersiegelwerkzeugen 26 in der Einricht- und Reinigungsstellung durchgeführt wird, wie sie in Figur 1 in der rechten Hälfte angedeutet ist. Die Spannplatte 24 bzw. die Spannplatten 24 befinden sich damit in horizontaler Richtung, so daß sie gleitend auf der Heizplatte 23 bzw. der Heizfolie 38 abgestützt, aufgenommen und von dieser getragen sind. Sie brauchen nur in ihre ordnungsgemäße Relativlage verschoben werden und mit Hilfe der Spanneinrichtung 41 festgespannt werden. Bei diesem Festspannvorgang wird die Spannplatte 24 auch auf die Heizplatte 23 gepreßt, so daß ein guter Wärmeübergang erzielt wird. Hierzu dienen nachspannbare Tellerfedern 42.

Die Figuren 5 und 6 verdeutlichen den maschinellen Antrieb 33 zum Verschwenken der Einheiten 16 und 17 um die Schwenkachsen 19 und 19'. Der maschinelle Antrieb 33 weist einen Getriebemotor 43 auf, von dem über eine Kette 44 ein Zahnrad 45 angetrieben wird, welches mit einer Welle 46 drehfest verbunden ist. Auf der Welle 46 sitzt weiterhin ein Zahnrad 47, welches über eine Kette 48 und ein Spannrad 49 ein Zahnrad 50 antreibt, welches mit dem Querholm 18' um die Schwenkachse 19' drehfest verbunden ist. Es ist eine Welle 51 vorgesehen, mit der ein Zahnrad 52 drehfest verbunden ist, welches über eine Kette 53 ein Zahnrad 54 antreibt, welches drehfest mit dem Schwenkholm 18 der Einheit 16 verbunden ist. Mit der Welle 46 ist weiterhin ein Zahnrad 55 und mit der Welle 51 ein Zahnrad 56 drehfest verbunden, die immer im Eingriff miteinander sind und über die einerseits der maschinelle Antrieb 33 auch auf die Einheit 16 übertragen wird und andererseits sichergestellt ist, daß sich die Einheiten 16 und 17 immer gleichzeitig und gegenläufig gemäß den Pfeilen 27 und 27' verschwenken. Mit dem Schwenkholm 18 ist eine Betätigungsstange 57 verbunden, der insbesondere als Endschalter ausgebildete Fühler 58 und 59 zugeordnet sind. Die Betätigungsstange 57 liegt an den Fühlern 58 an, wenn sich die Flachbeutelmaschine 1 in der Betriebsstellung befindet, in welcher der Siegelhub gemäß den Pfeilen 22 und 22' ausgeführt wird. Die Betätigungsstange 57 schlägt dagegen an den Fühler 59 an, wenn sich die beiden Einheiten 16 und 17 in der Einricht- und Reinigungsstellung befinden.

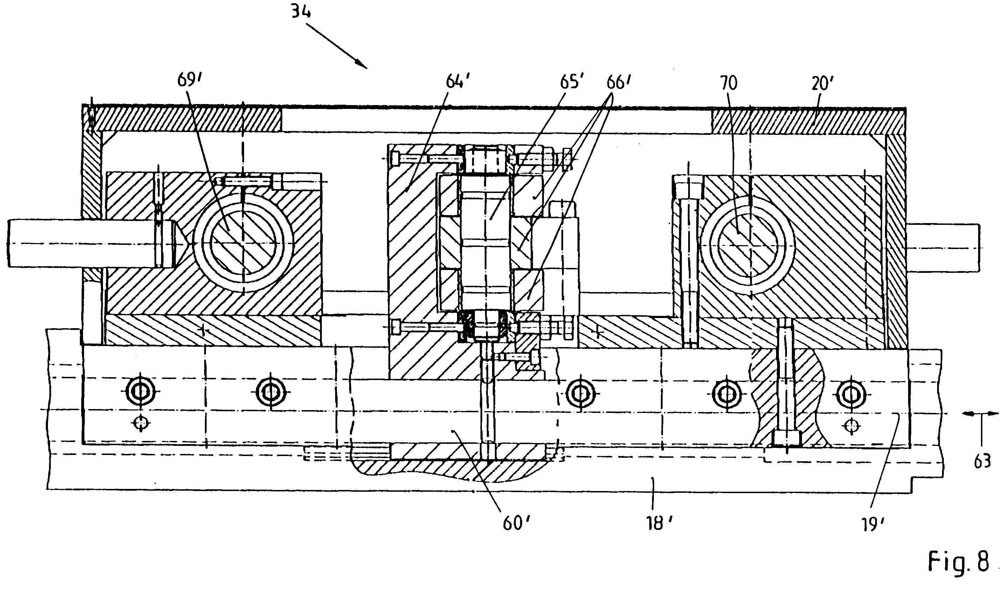

Der Siegelantrieb 34 ist in einigen wesentlichen Antriebsteilen aus den Figuren 7 bis 10 erkennbar. Wesentlich ist, daß der Siegelantrieb 34 durch die Schwenkholme 18, 18' hindurchgeführt ist. Die Schwenkholme 18 und 18' sind hohl ausgebildet. Mit Hilfe von in Figur 7 angedeuteten Nadellagern ist eine Schubstange 60 in dem Schwenkholm 18 in Richtung der Schwenkachse 19 hin- und hergehend gelagert. Entsprechend ist eine Schubstange 60' in dem Schwenkholm 18' untergebracht. Die beiden Schubstangen 60 und 60' sind über eine Brücke 61 miteinander verbunden. Über eine angedeutete Gleitbahn 62 wird der Antrieb eines nicht dargestellten Kurbelzapfens in einen hin- und hergehenden Antrieb für die Brücke 61 und die Schubstangen 60 und 60' aufgebracht, wie er entsprechend übersetzt für den Siegelhub erforderlich ist. Der hin- und hergehende Antrieb der Schubstangen 60 und 60' erfolgt gemäß Doppelpfeil 33, also parallel zu den Schwenkachsen 19 und 19'. In den Figuren 8 bis 10 sind nur noch die Teile der Einheit 17, also mit gestrichenem Bezugszeichen dargestellt. Es versteht sich, daß in symmetrischer Bauweise die Einheit 16 ausgebildet ist. Figur 8 läßt erkennen, daß mit der Schubstange 60' in dem Schwenkholm 18' ein Gabelklotz 64' verbunden ist, der somit die hin- und hergehende Bewegung gemäß Doppelpfeil 63 mitmacht und über einen Zapfen 65' auf einen Kniehebeltrieb 66 überträgt, der im Innern des Siegelholmträgers 20' angeordnet ist. Der Kniehebeltrieb 66' besitzt ein Festlager 67' in dem Siegelholmträger 20', während das freie Ende des anderen Kniehebels über einen Zapfen 68' mit dem Siegelholm 21' in Verbindung steht. Der Siegelholm 21' ist über zwei Führungsstangen 69' und 70' an dem Siegelholmträger 20' parallel geführt, damit er den Siegelhub gemäß Doppelpfeil 22' ausführen kann und den Siegelholm 21 immer senkrecht zu seiner Erstreckungsebene führt. Wie erkennbar, wird damit geschickt über einen Kniehebeltrieb 66 eine in Richtung der Schwenkachse 19' hin- und hergehende Bewegung gemäß Doppelpfeil 63 in eine dazu rechtwinklig erfolgende Bewegung des Siegelhubes gemäß Pfeil 22' übertragen bzw. übersetzt. Entsprechendes gilt für die andere Einheit 16. Auch hier ist der hin- und hergehende Antrieb der Schubstange 60 in dem Schwenkholm 18 in Richtung der Schwenkachse 19 letztlich in den Siegelhub gemäß Doppelpfeil 22 übersetzt.

## Patentansprüche

1. Vertikal taktweise arbeitende Flachbeutelmaschine (1) zum Abpacken von fließ- oder rieselfähigen Materialien oder von Gegenständen in zu siegelnde Flachbeutel, die aus zwei Folien (6, 7) mit gemeinsamer vertikaler Folienebene (9) gebildet werden, mit einem Maschinenrahmen (2), an dem von oben nach unten eine Dosierstation (3) mit Einfüllorganen (5), eine Umlenkstation (8) für die zwei Folien (6, 7), eine Siegelstation (15), eine Abzugseinrichtung (29) und eine Längs- und Querschneidestation (30, 31) vorgesehen sind, wobei die Siegelstation (15) zwei symmetrisch aufgebaute Einheiten (16, 17) aus je einem Schwenkholm (18, 18'), einem Siegelholmträger (20, 20'), einem mit einem Siegelantrieb (34) versehenen Siegelholm (21, 21'), einer Heizplatte (23, 23'), einer Spannplatte (24, 24') und den darauf befestigten Siegelwerkzeugen (25, 25') aufweist und die Einheiten (16, 17) je um eine Schwenkachse (19, 19') aus einer parallel zur Folienebene (9) verlaufenden, insbesondere um die Länge eines Siegelhubes auseinandergefahrenen Position um etwa 90° in eine Einricht- und Reinigungsstellung verschwenkbar sind,
**dadurch gekennzeichnet,** daß die Schwenkachsen (19, 19') für die Einheiten (16, 17) horizontal angeordnet sind und daß wesentliche Bereiche der Siegelwerkzeuge und der Spannplatten (24, 24') oberhalb einer die Schwenkachsen (19, 19') verbindenden Horizontalebene vorgesehen sind.

2. Flachbeutelmaschine nach Anspruch 1, dadurch gekennzeichnet, daß ein maschineller Antrieb (33) für die Verschwenkung der beiden Einheiten (16, 17) in die Einricht- und Reinigungsstellung sowie zurück vorgesehen ist.

3. Flachbeutelmaschine nach Anspruch 2, dadurch gekennzeichnet, daß der maschinelle Antrieb (33) mit einer Steuereinrichtung (32) versehen ist, die bei jeder Produktionsunterbrechung die Einricht- und Reinigungsstellung ansteuert.

4. Flachbeutelmaschine nach einem der Ansprüche 1 bis 3, dadurch gekennzeichnet, daß auch die Quersiegelwerkzeuge (26, 26') an der Spannplatte (24, 24') oberhalb der die Schwenkachsen (19, 19') verbindenden Horizontalebene angeordnet sind.

5. Flachbeutelmaschine nach einem der Ansprüche 1 bis 4, dadurch gekennzeichnet, daß auf das Erreichen der um den Siegelhub auseinandergefahrenen Stellung der Einheiten (16, 17) ansprechende Fühler (58, 59), insbesondere Endschalter, vorgesehen sind, über deren Signale die Steuereinrichtung (32) die Verschwenkung in die Einricht- und Reinigungsstellung einleitet.

6. Flachbeutelmaschine nach Anspruch 2 oder 3, dadurch gekennzeichnet, daß der maschinelle Antrieb (33) für die Verschwenkung der Einheiten (16, 17) einen Getriebemotor (43), zwei immer in Eingriff miteinander stehende Zahnräder (55, 56) und je eine getriebliche Verbindung zu dem Schwenkholm (18, 18') jeder Einheit (16, 17) aufweist.

7. Flachbeutelmaschine nach einem der Ansprüche 1 bis 6, dadurch gekennzeichnet, daß der Schwenkholm (18, 18') hohl ausgebildet ist und daß der Siegelantrieb (34) für den Siegelholm (21, 21') durch den Schwenkholm (18, 18') jeder Einheit (16, 17) hindurchgeführt ist.

8. Flachbeutelmaschine nach Anspruch 7, dadurch gekennzeichnet, daß im Schwenkholm eine Schubstange (60, 60') hin- und hergehend angetrieben ist, mit der ein Gabelklotz (64, 64') verbunden ist, und daß in dem Siegelholmträger (20, 20') ein Kniehebeltrieb (66, 66') für die Umlenkung des Siegelantriebes (34) auf den Siegelholm (21, 21') und damit letztlich auf die Siegelwerkzeuge (25, 26; 25', 26') vorgesehen ist, wobei der Gabelklotz (64, 64') an dem Kniehebeltrieb (66, 66') angreift.

9. Flachbeutelmaschine nach einem der Ansprüche 1 bis 8, dadurch gekennzeichnet, daß jede Einheit (16, 17) mit einer Spanneinrichtung (41) zum schnellen Wechsel der Spannplatte (24, 24') mit den darauf eingerichteten Siegelwerkzeugen (25, 26; 25', 26') versehen ist.

## Claims

1. Vertical cyclically working flat sack machine (1) for packaging flowable or pourable materials or objects in flat sacks to be sealed, which are formed from two foils (6, 7) with a common vertical foil plane (9), with a machine frame (2), on which are provided from top to bottom a measurer (3) with filling means (5), a deflector (8) for the two foils (6, 7), a sealer (15), a discharge device (29), and a longitudinal and transverse cutter (30, 31), in which the sealer (15) has two symmetrically fashioned units (16, 17), each comprising a pivot spar (18, 18'), a sealer spar support (20, 20'), a sealer spar (21, 21') with a sealer drive (34), a heating plate (23, 23'), a clamping plate (24, 24') and the sealing tools (25, 25', 26, 26') mounted thereupon, and in which the units (16, 17) each are pivotable from a position running parallel to the foil plane (9), especially separated by the length of a sealing lift, about a pivot axis (19, 19') by approximately 90° into a fitting and cleaning position, **wherein** the pivot axes (19, 19') for the units (16, 17) are arranged horizontally, and wherein essential parts of the sealing tools and the clamping plates (24, 24') are provided mainly above a horizontal plane connecting the pivot axes (19, 19').

2. The flat sack machine of claim 1, **wherein** a motor drive (33) is provided for pivoting the two units (16, 17) into and out of the fitting and cleaning position.

3. The flat sack machine of claim 2, **wherein** the motor drive (33) is provided with a control unit (32), which triggers the fitting and cleaning position at every interruption of the production process.

4. The flat sack machine of one of the claims 1 to 3, **wherein** also the transverse sealing tools (26, 26') are arranged on the clamping plate (24, 24') above the horizontal plane connecting the pivot axes (19, 19').

5. The flat sack machine of one of the claims 1 to 4, **wherein** upon reaching the position separated by the sealing lift, feelers (58, 59), especially limit switches, are provided, from the signals of which the control unit (32) initiates the pivoting into the fitting and cleaning position.

6. The flat sack machine of claim 2 or 3, **wherein** the motor drive (33) for pivoting the units (16, 17) has a gear motor (43), two meshing gears (55, 56), and one geared connection to the pivot spar (18, 18') of each unit (16, 17).

7. The flat sack machine of one of the claims 1 to 6, **wherein** the pivot spar (18, 18') is formed to be hollow and the sealer drive (34) for the sealer spar (21, 21') is led through the pivot spar (18, 18') of each unit (16, 17).

8. The flat sack machine of claim 7, **wherein** a thrust rod (60, 60') is driven moving to and fro inside the pivot spar, to which a fork block (64, 64') is connected, and that a knee lever drive (66, 66') for the deflection of the sealer drive (34) to the sealer spar (21, 21') and consequently to the sealing tools (25, 26, 25', 26') is provided in the sealer spar support (20, 20'), with the fork block (64, 64') acting on the knee lever drive (66, 66').

9. The flat sack machine of one of the claims 1 to 8, **wherein** each unit (16, 17) is provided with a clamping device (41) for quickly changing the clamping plate (24, 24') with the sealing tools (25, 26, 25', 26') arranged thereupon.

## Revendications

1. Machine à sachets plats (1) fonctionnant verticalement et en cadence pour l'empaquetage de matériaux coulants ou d'objets dans des sachets plats à sceller, qui sont formés de deux feuilles (6, 7) avec plan de feuille (9) vertical, commun, comportant un cadre de machine (2), sur lequel sont prévus, de haut en bas, un poste de dosage (3) avec des organes de remplissage (5), un poste de renvoi (8) pour les deux feuilles (6, 7), un poste de scellement (15), un dispositif de tirage (29) et un poste de coupe longitudinale et transversale (30, 31), le poste de scellement (15) comportant deux unités (16, 17) montées symétriquement, constituées chacune d'un longeron de pivotement (18, 18'), d'un support de longeron de scellement (20, 20'), d'un longeron de scellement (20, 21') pourvu d'un entraînement de scellement (34), d'une plaque chauffante (23, 23'), d'une plaque de serrage (24, 24') ainsi que des outils de scellement (25, 25') fixés dessus et les unités (16, 17) pouvant pivoter chacune autour d'un axe de pivotement (19, 19'), de 90° environ, à partir d'une position parallèle au plan de feuille (9), écartée en particulier de la longueur d'une course de scellement, dans une position d'installation et de nettoyage, caractérisée en ce que les axes de pivotement (19, 19') pour les unités (16, 17) sont disposés horizontalement et en ce que des zones essentielles des outils de scellement et des plaques de serrage (24, 24') sont prévues au-dessus d'un plan horizontal reliant les axes de pivotement (19, 19').

2. Machine à sachets plats selon la revendication 1, caractérisée en ce qu'il est prévu un entraînement mécanique (33) pour le pivotement des deux unités (16, 17) dans la position d'installation et de nettoyage et en retour.

3. Machine à sachets plats selon la revendication 2, caractérisée en ce que l'entraînement mécanique (33) est pourvu d'un dispositif de commande (32), qui pour chaque interruption de production commande la position d'installation et de nettoyage.

4. Machine à sachets plats sel on l'une des revendications 1 à 3, caractérisée en ce que les outils de scellement transversal (26, 26') sont disposés sur la plaque de serrage (24, 24'), au-dessus du plan horizontal reliant les axes de pivotement (19, 19').

5. Machine à sachets plats selon l'une des revendications 1 à 4, caractérisée en ce que sont prévues des sondes (58, 59), en particulier des interrupteurs de fin de course, réagissant à l'obtention de la position des unités (16, 17), éloignée de la course de scellement, par les signaux desquels le dispositif de commande (32) amorce le pivotement dans la position d'installation et de nettoyage.

6. Machine à sachets plats selon la revendication 2 ou 3, caractérisée en ce que l'entraînement mécanique (33) pour le pivotement des unités (16, 17) comporte un moto-réducteur (43), deux roues dentées (55, 56) toujours en prise |'une dans l'autre et chacune une liaison de transmission avec le longeron de pivotement (18, 18') de chaque unité (16, 17).

7. Machine à sachets plats selon l'une des revendications 1 à 6, caractérisée en ce que le longeron de pivotement (18, 18') est creux et en ce que l'entraînement de scellement (34) pour le longeron de scellement (21, 21') passe à travers le longeron de pivotement (18, 18') de chaque unité (16, 17).

8. Machine à sachets plats selon la revendication 7, caractérisée en ce que dans le longeron de pivotement est entraînée dans un mouvement de va-et-vient une tige de poussée (60, 60'), avec laquelle est relié un bloc à fourche (64, 64'), et en ce que dans le support de longeron de scellement (20, 20') est prévu un mécanisme à levier coudé (66, 66') pour la déviation de l'entraînement de scellement (34) sur le longeron de scellement (21, 21') et donc finalement sur les outils de scellement (25, 26 ; 25', 26'), le bloc à fourche (64, 64') agissant sur le mécanisme à levier coudé (66, 66').

9. Machine à sachets plats selon l'une des revendications 1 à 8, caractérisée en ce que chaque unité (16, 17) est pourvue d'un dispositif de serrage (41) pour le changement rapide de la plaque de serrage (24, 24') avec les outils de scellement (25, 26 ; 25', 26') installés sur celui-ci.
